# EUROPEAN PATENT APPLICATION

(11) **EP 1 667 072 A1**
(43) Date of publication of application: **07.06.2006**
(21) Application number: 04028711.2
(22) Date of filing: 03.12.2004
(51) Int. Cl.: G07B 17/00

(54) **Electronic mailing system**

(71) Applicant: Muus, Thomas, 5000 Odense C. (DK)
(72) Inventor: Muus, Thomas, 5000 Odense C. (DK)
(74) Representative: Tonnesen, Bo

(57) **Abstract**

The present invention relates to a method, a system and corresponding devices for electronic transmission of mail pieces such as post cards from a plurality of local kiosks 1, 1', 1'' or user interface posts 10, where an electronic version of for instance a post card can be created to a plurality of local reception and delivery centres 2, 3, 4, where a hard copy of said electronic version of a mail piece is created and subsequently delivered to an addressee. Using a preferred embodiment of the system, a user located at a first geographical location can purchase a post card comprising a picture of a local site of interest and using a user interface post 10 provide this post card with a text message and additional modifications together with the mailing address of an addressee, thereby creating a modified electronic version of the post card. Using the system according to the invention, this electronic version is sent to a reception and delivery centre 2, 3, 4, for instance a local post office 2, 3 or a regional post office 4 receiving mail to be distributed to a number of local post offices. At a local post office in the neighbourhood of the addressee a hard copy of the electronic version is created and finally delivered to the addressee. World-wide transmission of the electronic version of a mail piece can for instance be effected via the Internet, although in principle any suitable data transmission network could be used.

## Description

### TECHNICAL FIELD

The invention relates generally to world-wide delivery of mail pieces such as post cards or letters and more specifically to methods, systems and devices for reception of a mail piece at one geographical location and delivery of a replica of this mail piece at the mail address of an addressee.

### BACKGROUND OF THE INVENTION

During resent years the availability of personal computers, both stationary and mobile has become widespread and so has the access to the Internet either from personal computers or from other communication units such as mobile telephones provided with for instance Wireless Applications Protocol (WAP) communication means for access to the Internet, thereby enabling flexible communication on a world-wide basis. Also the use of electronic mail (e-mail) has become available to many users, not only for professional purposes but also for private use. Among other applications of e-mail communication, the use of e-mails for sending for instance holiday greetings to friends and family including text messages and various pictures for instance of the sender with a chosen local background has become popular. By this means of communication the addressee can receive said holiday greetings on his own personal computer.

Although the above mode of communication has become quite popular many people still enjoy receiving an actual post card or letter from a friend abroad due to the more authentic and personal appearance of the received mail piece. Also the sender may not have access to means for sending an e-mail or he may have acquired for instance a special post card, the content and appearance of which he thinks the addressee will particularly enjoy. Thus, the sender would like to provide the addressee with this particular mail piece, possibly provided with a personal text message in the sender's own handwriting and still have the advantage of the rapid and flexible mode of delivery provided by communication via the Internet.

### DISCLOSURE OF THE INVENTION

On the above background it is a first object of the present invention to provide a method and corresponding system and devices allowing a person to purchase a post card or other mail piece at a first geographical location and at a second geographical location recreate a replica of this post card or other mail piece for delivery to the addressee by the postal system at the second geographical location. Thus, according to one embodiment, the present invention simulates the actual physical delivery of for instance a post card purchased at one geographic location at a second remote address for instance in another country.

According to other embodiments of the present invention it is possible to alter the appearance of the original physical mail piece for instance by adding various kinds of graphical and/or pictorial elements to the post card prior to sending it from the first geographical location. A number of ways of modifying the appearance and content of the original mail piece will be described in the detailed description of the invention. According to the invention it may even be possible to add sound and/or still or moving pictures to the original post card as will also be described further below.

Optionally the mail piece delivered at the second geographical location may not be based on an actual physical mail piece provided at the first geographical location but on pictures, text and other data, access to which can be attained at the first geographical location and which information can be used for creating an electronic version of a mail piece.

Thus, according to a first aspect of the present invention there is provided a method for delivery of mail pieces at a customer comprising the following steps:
(a) at a first location creating an electronic version of a mail piece;
(b) provision of the mailing address of said customer or an address where said customer can pick up said mail piece;
(c) if required or desired provision of the address of a reception and delivery centre at a second location to which centre said electronic version of the mail piece is to be sent;
(d) transmission of said electronic version and said addresses via a transmission path to said reception and delivery centre;
(e) creation of a hard copy of the electronic version of the mail piece at said reception and delivery centre;
(f) delivery of said hard copy from the reception and delivery centre to the mailing address or said pick up address of the customer.

Referring to point (c) above, delivery of the hard copy of the mail piece could take place for instance by a special delivery service in stead of the postal service - for instance the local post office - at the site of reception. In such cases it might be necessary to indicate the address of this special service specifically, whereas in case of normal postal delivery the mailing address, for instance comprising the addressee's name, street and street number, postal number or zip code and country, would be sufficient for identifying the proper reception centre for the particular addressee.

Referring to point (d) above, the transmission path could comprise the Internet. As will be described in more detail below the transmission path could furthermore comprise global centres for providing global facilities to be shared by all users of a system implementing the above method and for control and supervision of the method and corresponding system.

Specifically, although not necessarily, the creation of an electronic version of a mail piece can according to the invention be based on an actual physical mail piece, as for instance a post card purchased at the first geographical location but it can also be based on libraries of pictures or other lay-outs of mail pieces stored in the system implementing the above method and available to the user at the site of creation of said electronic version of a mail piece. In the first of the above cases a step of actually providing a physical mail piece would precede step (a) above.

A mail piece can be any type of physical entity, which could be delivered by mail. A post card would be a typical example of a mail piece, which could be delivered by means of the method, system and devices according to the present invention. The electronic version of the post card would in this context comprise an electronic version of the post card itself provided with a text message written by the sender and the mailing address of the addressee. The post card can either be provided with a physical stamp prior to the creation of the electronic version or as an option an electronic "stamp" or code replacing a stamp can be created along with the creation of the electronic version of the post card. Such alternatives will be described in more detail in the detailed description of the invention.

According to the inventive method, the address of the reception and delivery centre can either be provided by the sender himself or optionally be automatically chosen by the system carrying out the inventive method based on the mailing address of the addressee provided by the sender.

According to a second aspect of the present invention there is provided a system for delivery of mail pieces at an addressee comprising:
(a) means for creating an electronic version of a mail piece comprising means for providing information about the appearance (pictures, text fields etc.) of a mail piece and means for loading the mailing address of an addressee, or an address where said addressee can pick up a hard copy of the electronic version of a mail piece, into the system;
(b) means for transmission of said electronic version and said addresses to a transmission network;
(c) means for downloading of said electronic version from said transmission network and provision hereof to one or more reception and delivery centres; and
(d) means for providing a hard copy of the electronic version of the mail piece at at least one of said reception and delivery centres for subsequent delivery to the addressee.

According to a preferred embodiment, the system furthermore comprises global centres for instance for providing common facilities to all the user interface posts such as pictures for inclusion in electronic versions of mail pieces etc. and for control and supervision of the data transmission throughout the system. Thus, according to this preferred embodiment of the invention, the system comprises:
(a) means for creating an electronic version of a mail piece comprising means for providing information about the appearance (pictures, text fields etc.) of a mail piece and means for loading the mailing address of an addressee or an address where said addressee can pick up a hard copy of the electronic version of a mail into the system;
(b) means for transmission of said electronic version and said addresses to a global control and supervision system;
(b) means for downloading of said electronic version from said global control and supervision system and provision hereof to a reception and delivery centre; and
(c) means for providing a hard copy of the electronic version of the mail piece at said reception and delivery centre for subsequent delivery to the addressee.

Furthermore, the present invention relates to an electronic kiosk or user interface post, i.e. an interface means for creating an electronic version of said mail piece as well as a receiving station for receiving an electronic version of a mail piece and creating a hard copy of this electronic version. As used in the present context the term "user interface post" is used to indicate a single physical unit at which the user can create or manipulate electronic versions of for instance post cards. The interface means may among other features comprise means for scanning of the mail piece, means for displaying the scanned version of the mail piece, means for providing a hard copy of the scanned and finished mail piece, means for providing the scanned mail piece with text and means for payment for the transaction. Numerous other features may optionally be present in the means and some of these will be described in the detailed description of the invention. The term "kiosk" is in the present context used to indicate a region, for instance a booth, enclosure or dedicated room containing said user interface post but possibly also containing other physical units which can be used during the creation or manipulation of electronic post cards or other mail pieces. Such units could for instance comprise a camera for taking a picture of the user for inclusion on the electronic version of the post card and this camera may advantageously be placed remotely from said user interface post. The kiosk may furthermore comprise a table for initial preparation of a mail piece prior to provision hereof the user interface post.

In a broader sense, the term "kiosk" may also relate to any portable electronic communication unit comprising means for creation and manipulation of an electronic mail piece. As an example of a communication unit, a mobile telephone provided with a camera could also be regarded as a "kiosk" within the context of the present invention.

In the first mentioned case where a kiosk is a region containing a user interface post according to the invention, the kiosk may be provided with a number of such user interface posts. Additionally tables for preparation of post cards could also contain some of the features (described in the detailed description of the invention) of the user interface post so that a part of the preparation of the electronic version of the mail piece can take place from the table rather than from the interface post. In this case the table should be provided with means for communicating with the interface post.

A number of embodiments of the above method, system and devices are described in the detailed description of the invention and defined by the corresponding dependent claims.

Application of the method, system and devices according to the invention as defined above can be exemplified by the following series of events, but it is understood that this is only one specific example of an application of the method, system and devices according to the invention. Further details will appear from the detailed description of embodiments of the invention.

A person attending an international convention has during the interval between successive presentations of papers at the convention centre found time to visit the picturesque old castle of the town in which the convention takes place and has in fact been able to purchase a post card of the castle. He wants to send this post card provided with a greeting to a friend living abroad. He knows that his friend is particularly fond of getting personal greetings, in the senders own handwriting, from travelling friends and in fact he values the authenticity of the received post card including the proper stamp of the country from which the post card is sent provided with the proper postmark. Time is short, however, and the sender has no time for visiting a post office to get a stamp and he is at any rate leaving the country of the convention in a few hours. It would be out of the question to take the post card with him on leaving the country and post it at a later opportunity.

The convention centre is, however, provided with a post according to the present invention where the post card can be scanned either provided with the text in the senders own handwriting prior to the scanning process or optionally provided with means for handwriting on the scanned image of the original post card. The post furthermore provides for the possibility of providing the image of the post card with a picture of a stamp from the country where the user interface post is situated and means for writing the mailing address of the addressee on the image in case the sender has not already written the mailing address on the original post card. Optionally the sender is also able to provide the post with information relating to the nearest post office for delivery of the post card in the country of the addressee for the purpose of ensuring that the post card be delivered to the addressee as soon as possible. Thus, the actual sending of the original, authentic post card requires very limited time and can easily be carried out at the convention centre. The sending of the post card can furthermore be charged on the post by a number of means either by payment by cash or by means of the sender's credit card or other electronic payment means. Soon the next day the addressee receives his post card, the appearance of which can resemble an original post card or other mail piece very closely.

The present invention offers a number of advantages for a user wishing to communicate world-wide with an addressee in cases where the addressee desires to receive a mail piece, i.e. physical entity corresponding to what he would have received in case of actual world-wide postal delivery.

### BRIEF DESCRIPTION OF THE DRAWINGS

The invention will be more fully understood by reference to the following detailed description of the invention in conjunction with the drawings, where:
Figure 1 shows a schematic overview of a system according to the invention;
Figure 2 shows a schematic perspective view of one embodiment of an interface post designed as a desk;
Figure 3 shows a schematic representation of a layout of an image of a post card;
Figure 4 shows a schematic representation of an alternative post card;
Figure 5 shows a schematic block diagram of an embodiment of an interface post and external server according to the invention; and
Figure 6 shows a schematic representation of the system and associated equipment at the receiving side of the Internet.

### DETAILED DESCRIPTION OF THE INVENTION

In the following detailed description of the present invention, embodiments of the system and associated devices according to the invention are shown and described in detail but it is understood that other embodiments of the underlying concept of the invention are also possible and comprised within the scope of the present invention as defined by the accompanying claims.

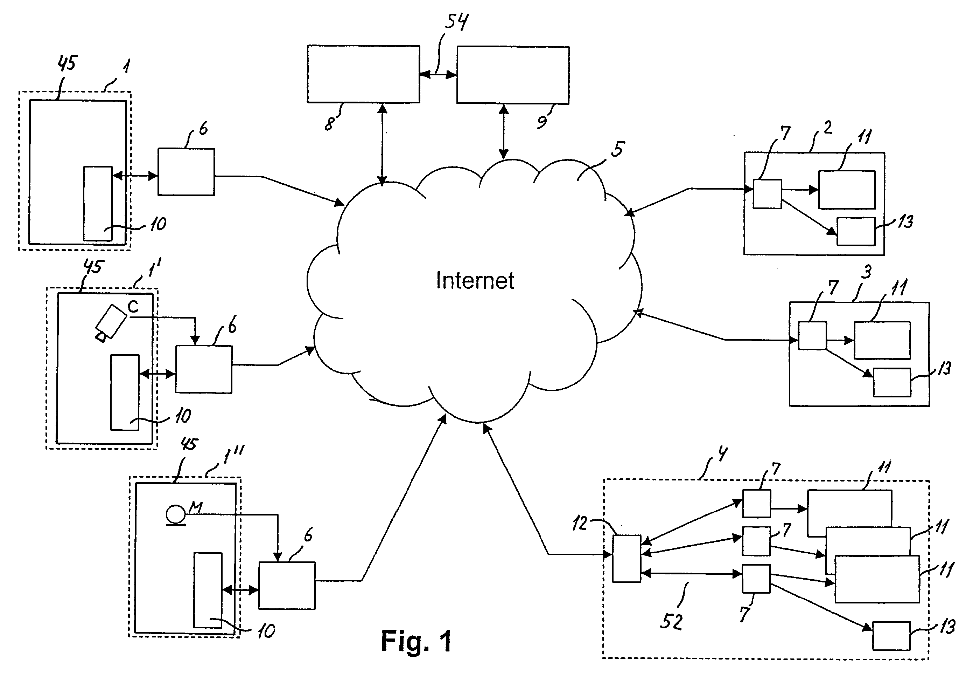

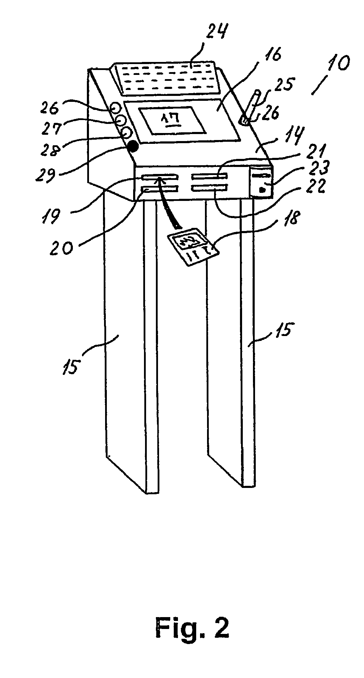

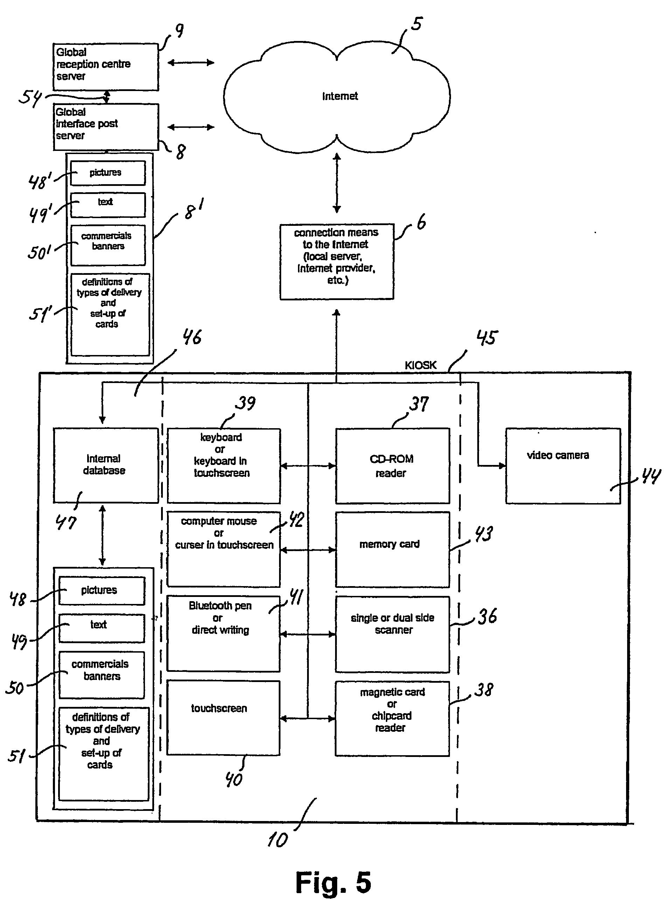

Referring to figure 1 there is shown a schematic overview of a system according to the invention. At one or more first geographical locations 1, 1', 1", where one could for instance be a hotel, convention centre or a place of historical interest there is provided a kiosk 45 comprising one or more user interface posts 10 and possibly also various additional equipment which will be described in the following for creating an electronic version of a post card or other mail piece. Among other features the interface post comprises scanning means for scanning an actual physical post card or other mail piece for subsequent creation of a finished electronic version hereof. An embodiment of the user interface post 10 will be described in detail below in connection with figures 2 and 5. In addition to the user interface post 10 other means for recording information to be incorporated in the electronic version of the mail piece may be provided, either in the interface post itself or adjacent the interface post. Such means could consist of a video camera C, camera and/or a microphone M as shown in figure 1. The created electronic version of the mail piece is transmitted to the Internet indicated by reference numeral 5 by means, the overall nature of which is known to a person skilled in the art. Thus, the post 10 can be connected to a local server connected to a chosen Internet provider as symbolised by the block 6 in figure 1. A more detailed description of an embodiment of this transmission is given in connection with figure 5. Via the Internet 5 access can be obtained to receiving locations 2, 3 and 4 for instance located in other countries around the world. The specific geographical location to which the electronic version of the mail piece is to be sent can be chosen by the sender at the interface post 10 by various means as described below.

According to a preferred embodiment of the invention, the system is provided with a global database 48', 49', 50', 51' forming a part of a global interface post server 8 for storing information that can be shared by all users (user interface posts 10) of the system. Furthermore, it will be beneficial that the system be provided with a global control and supervision system 9 for controlling transmission of data throughout the system. Although in principle each of the user interface posts 10 could communicate via a suitable network such as the Internet 5 directly with each of the local reception and delivery centres 2, 3, 4 it is advantageous that each reception and delivery centre communicates with a single global centre (a single address in the transmission network) and that similarly each user interface post communicates with a single global interface server containing said global database. The global centres 8, 9 may be situated in the same facility, for instance a chosen hotel or convention centre and may communicate directly with each other as shown by the double arrow 54 although they may also in principle be situated at different geographical locations and for instance communicate with each other via the Internet 5. A transmission path from a given user interface post to a given chosen reception and delivery centre could thus be: User interface post 10 - Internet 5 - global interface post server 8 - global control and supervision centre 9 - Internet 5 - local reception and delivery centre 2, 3, 4.

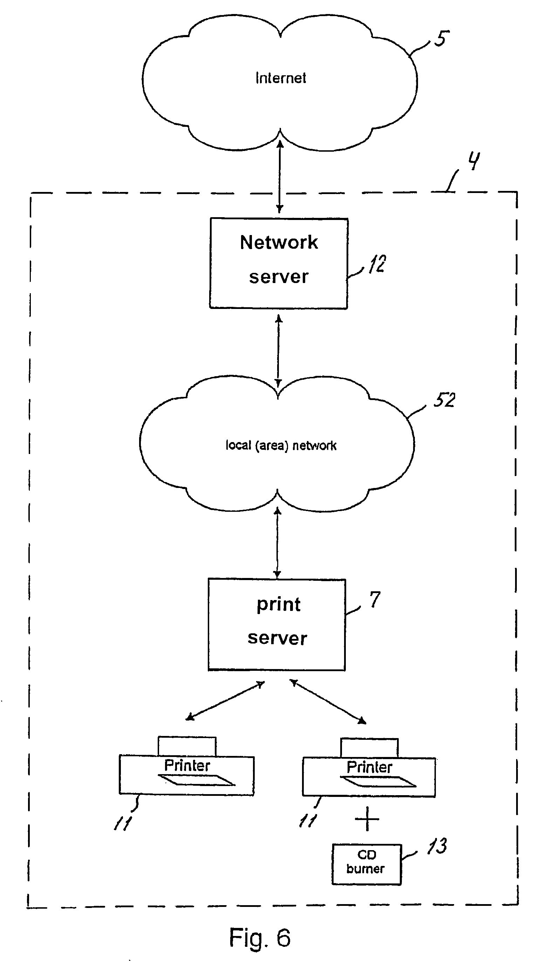

A "second geographical location" can for instance be region (for instance a country or a specific region within a country or a large city etc.) as indicated schematically by reference numeral 4 comprising a regional post office serving as a central reception and distribution centre, and provided with means such as a network server indicated schematically by 12 for communicating with the Internet 5 and furthermore via a local network with a number of local post offices indicated by 7, 11 in figure 1. Each of these comprises at least a print server 7 and an appropriately designed printer 11 for providing the hard copy of the electronic version of the mail piece. These printers can be adapted for creation of a hard copy closely resembling the original mail piece. Thus in the case of an actual physical post card based on which an electronic version is generated at the interface post 10 the appearance of the hard copy provided by the printing means 11 can if desired be brought to closely resemble the original post card. The printed hard copy is afterwards provided to the mailing address of the addressee by the ordinary mailing service of the region in which the post office is situated. The addressee thus receives a post card, the appearance of which corresponds to the original post card including hand written text and address of the addressee as written on the original post card by the sender. The second geographical location as indicated by 4 could also be a post office provided with a large number of printers for example for printing different types of mail pieces, each of these printers 11 being controlled by a print server 7 and connected to the network server 12 of the post office via a local area network (LAN) 52 (figure 6). Furthermore, the second geographical location could be a single post office as schematically indicated by 2 and 3 in figure 1 provided with appropriate network- and print servers and at least one printer. At least some of the post offices may furthermore be provided with means for storing information contained in the electronic version of the mail piece, for instance pictures, video- and audio sequences. Such means may consist of a CD- or DVD burner or means for writing on a memory card schematically indicated by 13 in figure 1 but other storage media may of course also be applied.

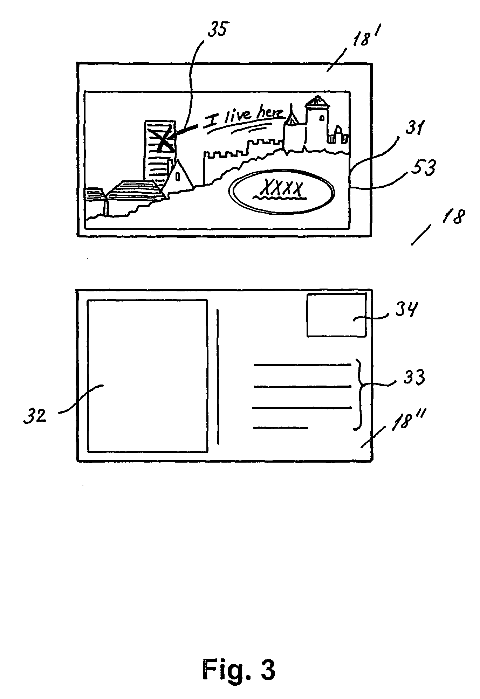

Now referring to figure 2 there is shown an exemplary embodiment of a user interface post 10 for use in the method and system according to the present invention, but it is understood that numerous other embodiments would also be possible. The interface post shown in figure 2 is designed in the form of a desk 14 supported by a couple of stands 15. The upper, inclined surface of the desk is provided with a display screen 16, which could be a touch screen upon which a picture of the post card or other mail piece 17 can be displayed. The interface post shown in figure 2 is furthermore provided with means for scanning a post card 18 schematically indicated at 19 and writing means indicated at 20 which could among other things be used for the provision of a hard copy of the finished electronic version of the post card. Also reader means 21, 22 for reading data stored on a medium such as a CD or memory card can be provided on the interface post. Furthermore, payment means, schematically shown as a credit card reader 23, by means of which payment for the transaction can take place can be provided. In stead of means for payment by credit card, the interface post 10 may also comprise a coin-operated machine for paying by cash or other means for affecting electronic payment of transactions. Another means of payment according to the invention will be described in connection with figure 3 below. Still other payment modes may be contemplated by a person skilled in the art and would fall within the scope of the invention as defined by the independent claims. Scanning can be performed by dual scanning means scanning both sides of the post card 18 simultaneously or by a single scanning means scanning one side at a time. In stead of a scanner, a suitable digital camera may also be used to provide the image of the post card 18 to be used in the creation of the electronic version of the mail piece. In either instance either one or both images of either sides can be shown on the screen 16 for further processing of the electronic version of the post card.

Various means for providing the scanned post card with text can be provided. In the embodiment shown in figure 2 such writing can be performed by means of the keyboard 24, which could for instance be used for entering the mailing address of the addressee or information to the system relating to location of the post office closest to the addressee. As a very desirable feature, the interface post may furthermore be provided with means for handwriting on the image 17 of the post card in cases where the original physical post card 18 has not already been provided with hand written text prior to scanning of the post card. Such writing on the image of the post card could for instance be accomplished by means of a Bluetooth pen 25 housed in a holder 26 when not used and preferably secured to the interface post by appropriate means in order to prevent removal of the pen from the interface post. Optionally the user might also use his own Bluetooth pen. A number of dedicated function keys 26, 27, 28 and 29 may also be provided for instance for initiating scanning of a post card, writing of a hard copy hereof and choosing between images of either the front side, rear side or both of the sides of the post card. One function key 29 could be used for initiating the transmission of the electronic version of the post card for instance to a local server and via an Internet provider to the Internet.

Using the reader indicated by 21 or 22 on figure 2 it may furthermore be possible to provide the created electronic version of a mail piece with the address information of a particular addressee and the user may for instance use a suitable recording medium such as a CD-ROM for storage of a complete list of addresses for loading into the interface post as required. Furthermore, as an option this stored address list may also comprise addresses of the post offices or other local reception and delivery centres located close to the mailing address of the addressee. Postal addresses may also be downloaded from the Internet and the user interface post 10 provided with means for reading such information.

Although not shown in figure 2, either the interface post itself or the kiosk in which it is situated can be provided with a camera and/or microphone for recording to pictures, video and sound to be delivered to the addressee together with the mail piece.

Apart from creating an electronic post card from a scanned version of an actual physical post card, the interface post (or an associated server etc.) may also be provided with a library of pictures for use during the creation of the electronic version of a post card. Furthermore, pre-recorded pictures and/or text may be loaded into the interface means as indicated at 21 or 22 of figure 2. It is also possible to provide either the interface post itself or a kiosk in which it is situated with video camera for instance for taking a picture of the sender for inclusion in the post card. Even sound or moving pictures may be included in the electronic version of the post card and on reception at one of the post offices indicated on figure 1 be stored on a suitable medium such as a CD, DVD or memory card for delivery to the addressee together with the post card. As an option, the storage medium could be placed in a folder or catalogue of the receiving centre (as for instance a folder designed as a special Christmas greeting) and delivered to the addressee.

Now referring to figure 3 there is shown a schematic representation of a layout of an image of a post card scanned into the interface post. In the upper part of figure 3 there is shown the front or picture side 18' of the post card 18 comprising the picture field 31. Below is shown the rear or text side 18" of the post card 18 comprising a text field 32, an address field 33 and a stamp field 34. As an option the text field 32 may extend over the complete text side 18" of the post card, possibly with the stamp field left free.

In the interface post, cursor means (for instance a computer mouse or optionally a touch on the touch screen in case the display screen 16 is actually of this type) can be provided for indicating the various lines of the address field. Thus, in case of using the keyboard 24 for entering text to the address field 33, the sender may point to the uppermost line of the address field and then enter the name of the addressee. On the other lines of the address field, the street name and number, the zip code and the country of the addressee can be entered using the keyboard.

Using the Bluetooth pen 25 shown in figure 2 the user may furthermore provide the picture shown on the front side 18' of the post card with text or drawings as indicated in figure 3, where the user (reference numeral 35) has indicated the site of his room in a hotel building on the location.

Furthermore, the interface post or the local server can be provided with commercials, for instance the logo or trademark of a travelling agency or a local sponsor for inclusion in the post card. This option is indicated in figure 3 by reference numeral 53.

A mode of payment for the transmission of the electronic version of a post card which is an alternative to those described previously consists of applying a label comprising a PDF-417 bar code to the stamp field 34 or elsewhere on the post card. The user interface post must be provided with means for reading the bar code, for instance a suitable laser scanner and corresponding decoding software. When the information contained in the bar code has been read, the image of the bar code is removed prior to transmission of the electronic version of the mail piece and it can if desired be replaced by an image of for instance a stamp from the geographical location (country) of the user interface post.

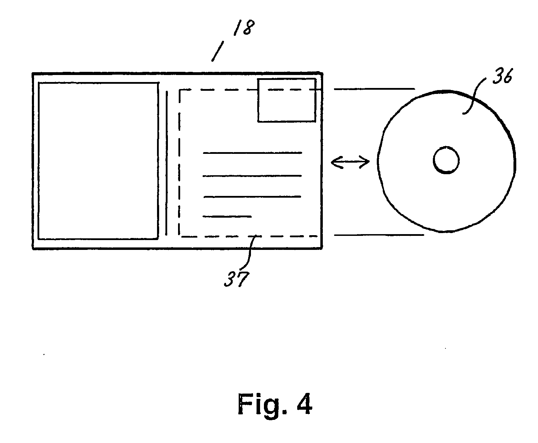

Occasionally an actual physical post card or other mail piece can be provided with a storage medium, for instance a CD, DVD or memory card for delivery together with the mail piece. This is indicated schematically in figure 4 by a CD, DVD or memory card 36, which can be accommodated in a pocket 37 in a post card. The storage medium can contain for instance audio data (a spoken greeting from the sender etc.), still images or even video sequences for instance recorded by the sender during his holiday or participation at an international convention.

Now referring to figure 5 there is shown a schematic representation of an embodiment of those portions of the system according to the present invention preceding the reception centres 2, 3, 4 shown in figure 1.

It is envisaged that the system according to the present invention in its broadest set up comprises a large number of user interface posts/kiosks located all over the world. All of these interface posts/kiosks communicate via the Internet with a large number of reception centres at receiving locations as already mentioned in connection with figure 1. World-wide supervision and control of data transfer between the various interface posts and reception centres can be performed by a global control and supervision system or global reception centre server schematically indicated at 9 and it is also possible to provide general access to libraries of pictures, commercials etc. stored on a global database indicated by 8' in figure 5. Thus, all interface posts within the system may share certain functions, pictures and text pieces apart from those functions, pictures, text pieces and additional features that are provided at the individual interface posts. This may reduce the costs and hardware requirements of the overall system according to the invention and facilitate updating of the information to be shared by all user interface posts throughout the system. Similarly, the provision of a single global control and supervision system or global reception centre server is advantageous compared with a system where each user interface post should communicate directly with each reception centre. Thus, among other information and features, the global control and supervision system contains information about the addresses of each of the reception centres associated with the system and the addresses of each of the user interface posts associated with the system.

According to the embodiment shown in figure 5, a kiosk 45, which could be a booth or suitable enclosure for instance in the reception area of a hotel or convention centre, at a suitable location in a museum or other site of interest etc., comprises the user interface post 10 and an additional camera 44 located adjacent the interface post but within the area of the kiosk. The interface post furthermore communicates with a local data storage means indicated by reference numeral 46 and comprising a local database 47 for storing for instance a library of pictures 48 to be included on the electronic version of the mail piece. Furthermore, text 49, various kinds of commercials 50 and definitions of types of delivery and layout of mail pieces etc. 51 can be incorporated in the local storage means.

The user interface post 10 communicates with the external world via a local server 6 providing access to the Internet 5 through a chosen Internet provider.

As already described in connection with figures 2 and 3, the interface post itself comprises a number of features, in figure 5 exemplified by the blocks 36 (single- or dual side scanner) 37 (CD-ROM reader), magnetic card or chip card reader 38, a keyboard 39 either as a traditional keyboard or in the form of a suitable layout of a touch screen 40, a Bluetooth pen 41 with corresponding receiver for direct handwriting on the scanned-in version of a mail piece and a memory card reader 43. According to this embodiment there is furthermore provided means for indicating the location on the image of the post card where text is to be applied. Such means may comprise a computer mouse or the display screen may also be a touch screen 42 enabling direct tactile indication of for instance the address field 33 of the post card as shown in figure 3 above. It is understood that the number of features contained in the interface post is not limited to those described in the present description but that a person skilled in the art could conceive other features relevant for attaining the objects of the invention and that such additional features would naturally fall within the scope of the invention as defined by the appended patent claims. Thus, in stead of using a Bluetooth pen for writing on the image 17 of the post card, a writing board could be provided adjacent the display screen or an ordinary pen or pencil could be used to write on a suitable touch screen.

Finally referring to figure 6 there is shown the receiving side of the system according to the invention in a specific embodiment hereof. The receiving side of the system shown in figure 6 corresponds to the area 4 shown in figure 1, i.e. a geographical region which is provided with a regional post office from which electronic versions of mail pieces are distributed to a number of local post offices situated within this area and from which local post offices mail pieces are finally distributed to the addressees. A regional post office 4 at a particular geographical location is provided with a network server 12 in communication with the Internet 5 for instance via a chosen internet provided. The data are then routed to the local print server 7 possibly via a suitable communication network, for instance a dedicated regional network 52, although any suitable communication network, including the Internet could in principle be used. Data are communicated from the network server 12 to print servers 7 situated at each of the post offices within the region and at each of these post offices a hard copy of the original mail piece is printed on appropriately adapted printing means, which in case of post card reception preferably should provide for dual side printing of the post card on a printing medium preferably resembling that of a typical post card, whereby a hard copy of the same appearance as a post card can be obtained. Furthermore, in order to deal with cases where the data received at the receiving centre also contain additional sound samples, still pictures, video sequences etc., means such as a CD burner 13 must be provided at the reception centre.

The printed post card is finally provided with either a local stamp or a specially designed "stamp" or label for instance bearing the mark "XXXX", the latter indicating that the system according to the invention has been used in order to effect the delivery of the post card from the first to the second geographical location. Alternatively, the electronic version can already at the user interface post at the first geographical location be provided with a picture of a stamp included in the electronic version of the post card. Finally, the receiving centre provides the post card with the date of reception of the post card, which due to the electronic transmission will equal the date of sending of the post card from the remote location. After finishing the hard copy of the post card this can eventually be delivered to the addressee by ordinary mail service.

## Claims

1. A method for delivery of mail pieces at a customer comprising the following steps:
(a) at a first location creating an electronic version of said mail piece;
(b) provision of the address of a reception and delivery centre at a second location to which centre said electronic version of the mail piece is to be sent;
(c) transmission of said electronic version and said addresses via a transmission path to said reception and delivery centre;
(d) the creation of a hard copy of the electronic version of the mail piece at said reception and delivery centre;
(e) delivery of said hard copy from the reception and delivery centre to the mailing address or said pick up address of the customer.

2. A method according to claim 1, **characterised in that** said creation of an electronic version of a mail piece is based on a physical mail piece.

3. A method according to claim 2, **characterised in that** said creation of an electronic version of a mail piece comprises the scanning of a physical mail piece thereby creating an electronic image of the physical mail piece.

4. A method according to claim 2, **characterised in that** said creation of an electronic version of a mail piece comprises recording an electronic image of a physical mail piece by photographic means such as a digital camera.

5. A method according to claim 2, 3 or 4, **characterised in that** said physical mail piece is a post card.

6. A method according to claim 5, **characterised in that** said physical mail piece is provided with a text message.

7. A method according to claim 2, 3 or 4, **characterised in that** said mail piece is a letter.

8. A method according to claim 3 to 4, **characterised in that** the electronic image of the mail piece is provided with a text message and/or the address of the addressee by means of a user interface provided at said first location.

9. A method according to claim 8, **characterised in that** said interface is an instrument that can in any way be used for writing.

10. A method according to claim 9, **characterised in that** said user interface is an electronic keyboard.

11. A method according to claim 9, **characterised in that** said user interface is a Bluetooth/USB pen.

12. A method according to claim 1, **characterised in that** said creation of a hard copy of the electronic version of the mail piece is attained by means of a printing apparatus that prints on a printing medium of predetermined physical characteristics.

13. A method according to claim 12, **characterised in that** said physical characteristics are chosen such that said hard copy attains a predetermined physical appearance.

14. A method according to claim 12 or 13, **characterised in that** said printing apparatus is adapted for printing of both sides of said printing medium.

15. A method according to claim 1, **characterised in that** the electronic version of the mail piece is furthermore provided with the address of a reception and delivery centre at a second location to which centre said electronic version of the mail piece is to be sent.

16. A method according to claim 1, **characterised in that** the electronic version of the mail piece furthermore contains digitised video- or audio sequences and that the reception centres are provided with means for making a hard copy of these sequences for delivery to the addressee together with the hard copy of the mail piece.

17. A method according to claim 1, **characterised in that** said transmission path comprises the Internet.

18. A method according to claim 1, **characterised in that** said transmission path comprises a global interface post server (8) for storing global information for instance comprising pictures, text, commercials which can be utilised by all users of the system.

19. A method according to claim 1 or 18, **characterised in that** said transmission path comprises a global control and supervision system (9) controlling data transmission throughout the system.

20. A system for delivery of mail pieces at a customer comprising
(a) means (10) for creating an electronic version of a mail piece comprising means for providing information about the appearance (pictures, text fields etc.) of a mail piece and means for loading the mailing address of an addressee, or an address where said addressee can pick up a hard copy of the electronic version of a mail piece, into the system;
(b) means (5) for transmission of said electronic version and said addresses to a transmission network (5);
(c) means for downloading of said electronic version from said transmission network (5) and provision hereof to one or more reception and delivery centres (2, 3, 4); and
(d) means (11, 13) for providing a hard copy of the electronic version of the mail piece at at least one of said reception and delivery centre for subsequent delivery to the addressee.

21. A system according to claim 20, **characterised in that** the system furthermore comprises a global interface post server (8) for storing (48', 49', 50', 51') global information for instance comprising pictures, text, commercials etc., which can be utilised by all users of the system.

22. A system according to claim 20, **characterised in that** the system furthermore comprises a global control and supervision system (9) for controlling transmission of data throughout the system.

23. A user interface post (10) for creating an electronic version of a physical mail piece such as a post card comprising means (19) for scanning or taking a photograph of said physical mail piece (18), means (24, 25) for modifying the appearance of said scanned version of the mail piece, means (16) for displaying the scanned or photographed version and the modified version hereof and means for outputting the modified version of the mail piece for transmission to one or more remote locations.

24. A user interface post according to claim 23, **characterised in that** said scanning means is a dual scanner enabling simultaneous scanning of both sides of a mail piece.

25. A user interface post according to claim 23 or 24, **characterised in that** the post being furthermore provided with a display screen (16) for displaying the scanned version both with and without said modifications.

26. A user interface post according to any of the preceding claims 23 to 25, **characterised in that** the means for modifying the appearance of the scanned mail piece comprises a keyboard (24) and/or a Bluetooth pen (25).

27. A user interface post according to claim 23, **characterised in that** it comprises printer means (20) for printing a hard copy of the modified mail piece.

28. A user interface post according to claim 23, **characterised in that** it comprises payment means (23) for payment for the transaction at the interface post (10).

29. A user interface post according to claim 23, **characterised in that** it comprises means for reading a PDF-417 bar code attached to said physical mail piece.

30. A kiosk comprising a user interface post according to any of the preceding claims 23 to 29.

31. A kiosk according to claim 30, **characterised in that** it is furthermore provided with audio/visual means (C, M) for further modifying the appearance and/or information content of the electronic version of the mail piece.

32. A kiosk according to claim 31, **characterised in that** said audio/visual means comprises one or more video cameras and/or microphones.

33. A receiving station for receiving an electronic version of a mail piece and based on this creating a hard copy for delivery at an addressee, the mailing address of whom is received together with the electronic version of the mail piece.

34. A receiving station according to claim 33, **characterised in that** said hard copy is attained by means of a printer.

35. A receiving station according to claim 34, **characterised in that** said printer is adapted for printing on both sides of a suitable printing medium.

36. A receiving station according to claim 33, **characterised in that** it furthermore comprises means for storing further information received together with the electronic version of a mail piece on a storage medium such as a CD or DVD, whereby said further information can be delivered to the addressee together with the hard copy of the electronic mail piece.
